# EUROPEAN PATENT APPLICATION

(11) **EP 2 626 122 A1**
(43) Date of publication of application: **14.08.2013**
(21) Application number: 12154678.2
(22) Date of filing: 09.02.2012
(51) Int. Cl.: B01D 46/04, B01D 46/00, B01D 46/42

(54) **Valve arrangement**

(71) Applicant: Alstom Technology Ltd, 5400 Baden (CH)
(72) Inventor: Hjelmberg, Anders Erik, 352 44 Växjö (SE); Peco, Faruk, 393 59 Kalmar (SE)
(74) Representative: Bratt, Hanna Catharina

(57) **Abstract**

A fabric filter valve arrangement (9) adapted for providing pulses of compressed gas to clean fabric filter bags (6) in a fabric filter (1). The valve arrangement (9) comprises a plunger (12) movable in relation to an edge (15) of a first end (16) of a pulse pipe (13). When the valve arrangement (9) is closed the plunger (12) abuts the edge (15) of the first end (16) of the pulse pipe (13) thus blocking the flow of compressed gas to the interior (13a) of pulse pipe (13). A sealing portion (19) of a sealing material is arranged at the plunger (12) and/or the edge (15) of the first end (16) of the pulse pipe (13).

## Description

### Technical field

The present invention relates to a valve arrangement for providing pulses of compressed gas to clean at least one fabric filter bag.

### Background

Fabric filters are frequently used in gas cleaning systems. Such fabric filters typically include a number of filter bags where gas may enter while particles or dust entrained in the gas are stopped by the filter fabric and end up on the outside of the filter bags. When such a fabric filter has been in use for a while, the outside surfaces of the filter bags are more or less covered with particles or dust and the filter bags then need to be cleaned in order to maintain a proper passage of gas through the fabric. The cleaning of the filter bags may take place by providing a pulse of compressed air to the inside of the filter bags to quickly stretch the fabric thereby "shaking off" the particles attached to the outside surfaces of the filter bags. In order to be able to provide the pulses of compressed air to the filter bags, a valve arrangement may be provided.

EP 0 678 177 discloses a valve arrangement for connecting compressed-air pulses to vertically arranged, bag-shaped filter bags in a filtering plant for cleaning polluted gases. Even though this valve arrangement is well functioning, improvements may still be needed in some cases.

### Summary

According to one aspect illustrated herein, there is provided a fabric filter valve arrangement for providing pulses of compressed gas to clean at least one fabric filter bag, comprising a plunger and a pulse pipe having a first end and a second end, wherein the plunger and the pulse pipe are movable in relation to each other between an open state and a closed state of the valve arrangement. The plunger in the closed state is arranged to abut an edge of the first end of the pulse pipe and thereby close the first end of the pulse pipe, and the plunger in the open state is arranged to allow compressed gas to pass into the first end of the pulse pipe thereby providing a pulse of compressed gas emitted from the second end of the pulse pipe. A sealing portion made of a sealing material is arranged at, at least one of, the plunger and the edge of the first end of the pulse pipe. Hence, sealing is provided between the plunger and the edge of the first end of the pulse pipe in the closed state of the valve arrangement.

According to other aspects illustrated herein a fabric filter cleaning system is provided which comprises a valve arrangement.

The above described and other features are exemplified by the following figures and detailed description.

### Brief description of the drawings

Referring now to the figures, which are exemplary embodiments, and wherein the like elements are numbered alike:
Fig. 1 illustrates a schematic side cross sectional view of a fabric filter.
Fig 2 illustrates a side view of a valve arrangement.
Figs 3a-3f illustrate partial side cross sectional views of differing embodiments of a detail of the valve arrangement of Fig. 2.

### Detailed description of preferred embodiments

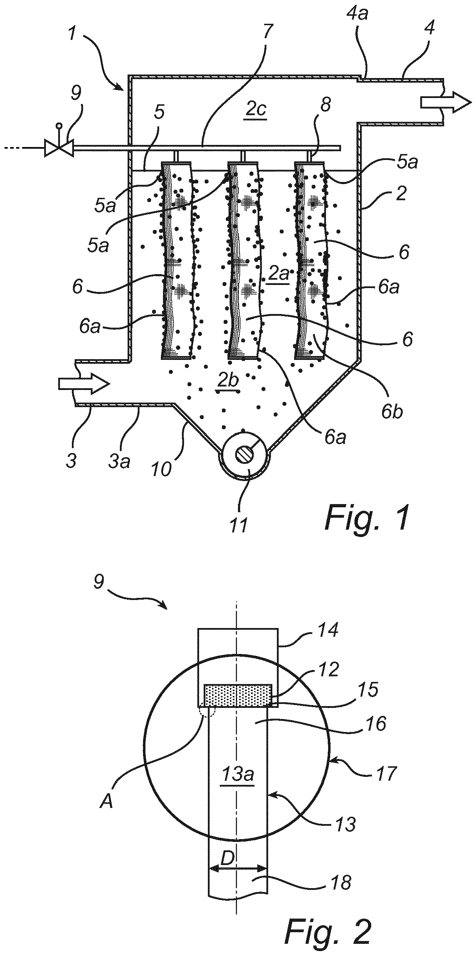

Fig. 1 is a schematic side cross sectional view of a fabric filter 1. The fabric filter 1 comprises a housing 2. Duct 3 is a gas inlet into interior 2a of housing 2, for a gas from which particulate materials, such as dust, is to be removed. Duct 3 is fluidly connected at a connection 3a or integrally formed with a lower portion 2b of the housing 2. Duct 4 is a cleaned gas outlet from interior 2a connected at a connection 4a or integrally formed with an upper portion 2c of the housing 2. A horizontal plate 5 is arranged in interior 2a of the housing 2 between ducts 3 and 4. A number of fabric filtering devices in the form of elongated tubular fabric bags 6 are removably attached in openings 5a in the plate 5. Typically, a fabric filter 1 may comprise 2 to 20 000 such fabric bags 6. In operation, dust particle loaded gas, e.g., a flue gas from a combustion facility, enters the lower portion 2b of the housing 2 via the duct 3. The gas then passes through the fabric of the bags 6 and into the interior 6a of the bags 6, while the dust particles are collected on the outside surface 6b of the bags 6. Then, cleaned gas flows from the interior 6a of the bags 6, through opening 5a of the plate 5 to exit the fabric filter 1 via the duct 4.

Occasionally, it is necessary to remove collected dust particles from the outside surface 6b of the bags 6. A pulsing gas duct 7 is arranged in the upper portion 2c of the fabric filter 1. The pulsing gas duct 7 is provided with one pulsing nozzle 8 for each of the openings 5a with attached bags 6. The pulsing gas duct 7 is connected to a valve arrangement 9 fluidly connected to a supply of compressed gas, such as pressurized air. The compressed gas typically has an absolute pressure of 2-6 bar, to be suitable for cleaning the outside surface 6b of bags 6.

When it has been determined that it is suitable to remove collected dust particles from the outside surface 6b of bags 6, such determination being based on, for example, a certain time having elapsed since the last removal of dust particles, or a certain pressure drop in gas flow as measured between the duct 3 and the duct 4, being reached, the valve arrangement 9 is opened for a short period of time, typically a period of time of 150 to 500 ms. The opening of the valve arrangement 9 for the short period of time results in a short pulse of gas flowing through interior 13a of pulse pipe 13, to fluidly connected pulsing gas duct 7 and the respective fluidly connected pulsing nozzles 8, into the interior 6a of the bags 6. As an effect of such pulse of gas, the bags 6 expand rapidly, causing most, if not all, of the dust collected on the outside surface 6b thereof to be released. Such released dust falls downwardly into a hopper 10 of the housing 2. Hence, the duct 7, the nozzles 8 and the valve arrangement 9 form a cleaning system of the fabric filter 1. Occasionally the dust is removed from the hopper 10 by means of, for example, a screw 11.

Fig. 2 schematically shows an exemplifying embodiment of the valve arrangement 9. The valve arrangement 9 comprises a plunger 12 and a pulse pipe 13. The plunger 12 is movable inside a valve housing 14 between an open state and a closed state of the valve arrangement 9. In the closed state, as shown in Fig. 2, the plunger 12 abuts an edge 15 of an open first end 16 of the pulse pipe 13 and thereby closes or blocks the first end 16 of the pulse pipe 13 so that compressed gas, e.g., compressed air, present in a pressure tank 17 surrounding the first end 16 of the pulse pipe 13, is unable to enter the pulse pipe 13 and flow through the interior 13a thereof. In the open state, plunger 12 is displaced from and does not abut edge 15 of open first end 16 and the compressed gas in the pressure tank 17 is allowed to enter the pulse pipe 13 and flow through interior 13a to pulsing gas duct 7 and the respective fluidly connected pulsing nozzles 8. The pulses of compressed gas which are achieved by quickly opening and closing the valve arrangement 9 are emitted from a second end 18 of the pulse pipe 13 fluidly connected to the pulsing gas duct 7 and continue to nozzles 8 to clean bags 6.

It may also be possible to arrange the edge 15 of the pulse pipe 13 to be movable into and out of contact with the plunger 12, or indeed, both of the pulse pipe 13 and/or its edge 15 and the plunger 12 may be movable in relation to each other. In other words, the edge 15 of the pulse pipe 13 and the plunger 12 cooperate within the pressure tank 17 to close and open a passage for compressed gas to flow into the pulse pipe 13. The plunger 12 and the pulse pipe 13 are manufactured from a hard material, e.g. steel or a polyamide material, or any other suitable material having a hardness similar to or comparable to the hardness of those materials, and which is able to withstand the repeated collisions between the two as the valve arrangement 9 is opened and closed for providing the pulses of compressed gas. The pulse pipe 13 and the plunger 12 may be made of the same material or different materials. In any case, the hardness and non-deformability of the plunger 12 and the pulse pipe 13 implies that the tolerances in the forming of the plunger 12 and the edge 15 of the first end 16 of the pulse pipe 13 are small. In order to be able to efficiently provide the compressed gas pulses, and minimize the pressure drop, any gas leakage should be minimized when the valve arrangement 9 is in its closed state.

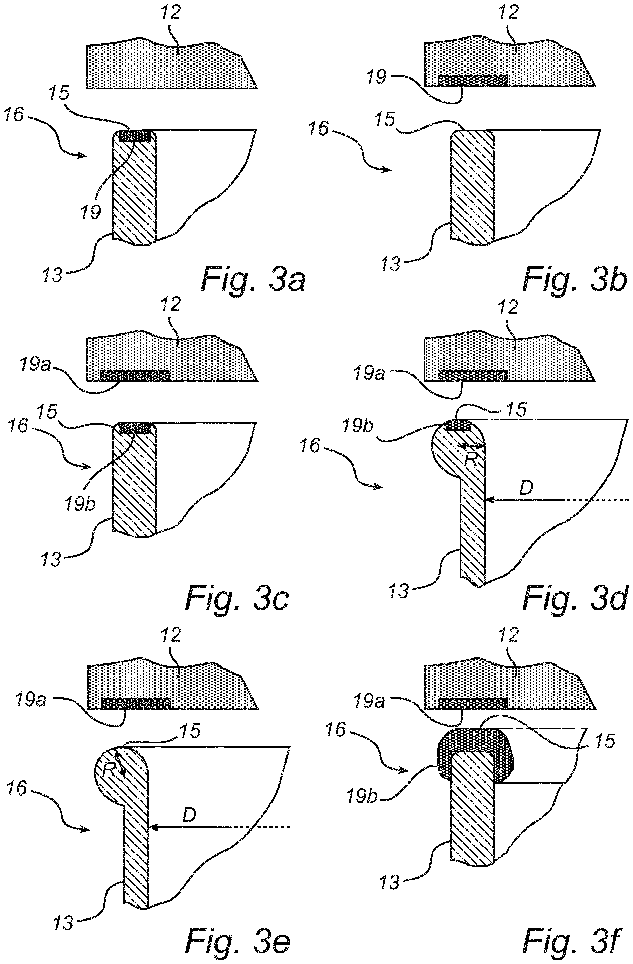

In the different embodiments detailed in Figs 3a-3f one or more sealing portions 19 of a sealing material are present at either the plunger 12 or at the edge 15, or in both of those. The sealing material may be more deformable than the materials forming the plunger 12 and the pulse pipe 13, for improved closing of the first end 16 of the pulse pipe 13 in the closed state of the valve arrangement 9, while at the same time relaxing the tolerance requirements, since the sealing portion(s) 19 may compensate for any imperfections in the abutting surfaces of plunger 12 and edge 15. As the closing of the valve arrangement 9 is improved, the leakage of compressed gas can be reduced, in turn reducing costs for providing compressed gas to the fabric filter cleaning system.

As the plunger 12 abuts the edge 15, the sealing portion 19 present at either the plunger 12 or the edge 15 or both may be deformed to some extent, thereby improving the gas tightness of the valve arrangement 9 in the closed state. The deformation of sealing portion 19 is possible since the sealing portion 19 is softer than the material of the plunger 12 and the pulse pipe 13, or in other words has a lower deformation hardness than the hardness of the plunger 12 and the pulse pipe 13. Suitable materials for fabricating sealing portion 19 may include polymeric materials such as plastic, or other materials having suitable properties such as natural or synthetic rubber. The sealing material further may have some elastic properties.

A number of non-limiting examples of arrangements of the sealing portion 19 in the area A where the plunger 12 abuts the edge 15 are shown in more detail in Figs 3a-3f. For the sake of illustrational clarity, the valve arrangement 9 is here shown in an open state.

In Fig. 3a the sealing portion 19 is arranged at the edge 15 of the first end 16 of pulse pipe 13. In Figs 3b and 3e the sealing portion 19 is arranged at the plunger 12. In Figs 3d-3f the edge 15 is in the shape of a "bell mouth", having a more rounded profile, with a radius R to the edge 15. The rounded profile of the bell mouth facilitates the flow of compressed gas into the open first end 16 of the pulse pipe 13 when the valve arrangement 9 is in its open state. The radius R may be between 5 and 15 mm, or it may be defined as R>0.1 times D, where D is the diameter of the pulse pipe 13.

In Fig. 3c and 3d a first sealing portion 19a is present at the plunger 12 and a second sealing portion 19b is present at the edge 15. In Fig. 3f the sealing portion 19 is present both at the plunger 12 and at the bell mouth shaped edge 15, and more specifically essentially the entire bell mouth shape is made of sealing material. Other variants are also possible, such as a portion 19 of sealing material being present only at the bell mouth shaped edge 15, as shown in Fig. 3d and 3f, but with no sealing portion at the plunger 12.

It may be noted that having the portion of sealing material arranged at the pulse pipe edge makes it easy to provide a desired geometry to the pulse pipe entrance, which in turn may improve flow characteristics for the compressed gas flowing into the pulse pipe when the valve arrangement 9 is open.

When the sealing portion 19 is arranged at the plunger 12 an easy way of implementing embodiments of the invention in existing equipment is provided, as it is fairly simple to replace or modify the plunger 12.

Finally, when sealing portions 19 are arranged at both the plunger 12 and the edge 15 it is possible to combine different sealing materials between the two locations, which in turn may provide an even more efficient sealing.

The sealing portions 19, 19a, 19b of sealing material may be at least partially integrated in or manufactured in one piece with the material of the plunger 12 and/or the edge 15. When the edge 15 has a bell mouth shape the sealing portion 19 or 19b may be at least partially integrated in the bell mouth shaped edge 15. Integrating or partially integrating the sealing portion 19 in the material of the plunger 12 and/or the edge 15 provides a secure attachment of the sealing portion which allows it to withstand the large number of repeated collisions between the plunger 12 and the pulse pipe 13 which occurs when the valve arrangement 9 is repeatedly opened and closed to provide the pulses of compressed gas to the nozzles 8 via the pulsing gas duct 7.

To summarize, the valve arrangement 9 presented herein provides an improved sealing in a valve arrangement 9 adapted for providing pulses of compressed gas to clean fabric filter bags 6 in a fabric filter 1. The valve arrangement 9 comprises a plunger 12 movable in relation to an edge 15 of a first end 16 of a pulse pipe 13. When the valve arrangement 9 is closed the plunger 12 abuts the edge 15 of the first end 16 of the pulse pipe 13 thus blocking the flow of compressed gas to the interior 13a of the pulse pipe 13. A sealing portion 19 of a sealing material is arranged at the plunger 12 and/or the edge 15 of the first end 16 of the pulse pipe 13. In this manner leakage of compressed gas into pulse pipe 13 is reduced which in turn reduces the cost of the cleaning equipment for the fabric filter 1. At the same time the tolerance requirements are relaxed between the plunger 12 and the edge 15 of the first end 16 of the pulse pipe 13, as the sealing material due to its elastic and/or deformable properties is able to fill out any irregularities in the shape of the abutting surfaces of the plunger 12 and the pulse pipe 13. This in turn means further cost reductions in manufacturing the valve arrangement 9.

While the invention has been described with reference to a number of preferred embodiments, it will be understood by those skilled in the art that various changes may be made and equivalents may be substituted for elements thereof without departing from the scope of the present invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A fabric filter valve arrangement (9) for providing pulses of compressed gas to clean at least one fabric filter bag (6), comprising a plunger (12) and a pulse pipe (13) having a first end (16) and a second end (18), wherein the plunger (12) and the pulse pipe (13) are movable in relation to each other between an open state and a closed state of the valve arrangement (9), wherein the plunger (12) in the closed state is arranged to abut an edge (15) of the first end (16) of the pulse pipe (13) and thereby close the first end (16) of the pulse pipe (13), and wherein the plunger (12) in the open state is arranged to allow compressed gas to pass into the first end (16) of the pulse pipe (13) thereby providing a pulse of compressed gas emitted from the second end (18) of the pulse pipe (13), **characterized by** a sealing portion (19;19a,19b) made of a sealing material arranged at, at least one of, the plunger (12) and the edge (15) of the first end (16) of the pulse pipe (13), such that sealing is provided between the plunger (12) and the edge (15) of the first end (16) of the pulse pipe (13) in the closed state of the valve arrangement (9).

2. The valve arrangement of claim 1, wherein the sealing portion (19; 19a,19b) of sealing material forms an integral part of at least one of the plunger (12) and the edge (15) of the first end (16) of the pulse pipe (13).

3. The valve arrangement of any of the preceding claims, wherein a first sealing portion (19a) is arranged at the plunger (12), and wherein a second sealing portion (19b) is arranged at the edge (15) of the first end (16) of the pulse pipe (13).

4. The valve arrangement of any of the preceding claims, wherein the edge (15) of the first end (16) of the pulse pipe (13) has the shape of a bell mouth.

5. The valve arrangement of claim 4, wherein the bell mouth shaped edge (15) has a radius (R) of 5 to 15 mm.

6. The valve arrangement of any of claims 4-5, wherein the bell mouth shaped edge (15) has a radius (R) which is at least 0.1 times the diameter (D) of the pulse pipe (13).

7. The valve arrangement of any of claims 4-6, wherein the sealing portion (19) is at least partly integrated in the bell mouth shaped edge (15).

8. The valve arrangement of any of the preceding claims, wherein the plunger (12) and the pulse pipe (13) are manufactured of a hard polyamide material or steel, or of materials with essentially similar hardnesses.

9. The valve arrangement of any of the preceding claims, wherein the sealing material of the sealing portion (19; 19a,19b) has a hardness which is lower than the hardness of the material of the plunger (12) and is lower than the hardness of the edge (15) of the first end (16) of the pulse pipe (13).

10. The valve arrangement of any of the preceding claims, wherein the sealing material is at least partially deformable.

11. The valve arrangement of any of the preceding claims, wherein the sealing material comprises a polymeric material.

12. The valve arrangement of any of the preceding claims, wherein the sealing material comprises a plastic material.

13. The valve arrangement of any of claims 1-11, wherein the sealing material comprises natural or synthetic rubber.

14. The valve arrangement of any of claims 1-9, wherein the pulse pipe (13) is arranged to extend through a pressure tank (17) adapted for containing compressed gas, such that the first end (16) and the interior (13a) of the pulse pipe (13) is in fluid contact with the compressed gas in the pressure tank (17) in the open state of the valve arrangement (9).

15. A cleaning system arranged for cleaning a fabric filter (1), the cleaning system comprising a valve arrangement (9) according to any of claims 1-14.
